# EUROPEAN PATENT SPECIFICATION

(11) **EP 3 118 273 B1**
(45) Date of publication and mention of the grant of the patent: **23.12.2020**
(21) Application number: 16172860.5
(22) Date of filing: 03.06.2016
(51) Int. Cl.: C09D 133/06, C08L 33/06

(54) **MULTILAYER MATERIAL USABLE PARTICULARLY AS DAMPING MATERIAL**
MEHRSCHICHTIGES MATERIAL INSBESONDERE ALS DÄMPFUNGSMATERIAL EINSETZBAR
MATÉRIAU MULTICOUCHE UTILISABLE NOTAMMENT COMME MATÉRIAU D'AMORTISSEMENT

(30) Priority: 03.06.2015 IT UB20151058
(43) Date of publication of application: 18.01.2017
(73) Proprietor: Becchis Osiride S.r.l., 10151 Torino (IT)
(72) Inventor: BERTOLAJA, Giovanni, 10151 TORINO (IT); FULCHERI, Claudio, 10151 TORINO (IT)
(74) Representative: Fiussello, Francesco

(56) References cited:
- GB-A- 840 663
- JP-A- 2004 018 670
- US-A1- 2003 144 409
- US-A1- 2004 211 934
- US-A1- 2009 017 216
- US-A1- 2009 188 746

## Description

### TECHNICAL FIELD

The present invention according to the appended claims relates to a multilayer material usable particularly as damping material.

### STATE OF THE ART

It is known to use double-layer materials as damping materials, particularly, in the manufacturing fields of automobiles, transport means, commercial and industrial vehicles in general, small and large household appliances and in the railway and construction field.

In the field of motor vehicles, transport means and commercial and industrial vehicles, the damping materials are used to mitigate and eliminate the noise generated by the vibration of the metal sheets with which the vehicle body is made. For this purpose, the damping material is applied solidly and permanently to the metal sheet.

It is known, for example, to use damping materials formed by a bitumen based layer co-laminated with a thin metal layer. Traditional damping materials comprising a bituminous substrate, however, are not very malleable and moldable and are not easy to apply, especially on metal sheets with ribs and bosses. For being applied the damping material must then be preheated in order to be softened.

Also known to be used as a damping material is a non-reticulated butyl rubber layer, coupled to a metal layer to form sheets, from which appropriate lengths are cut out for the various applications.

The butyl however, is very sticky and comes leaks from the pre-cut edges of the sheets due to the pressure exerted on the sheet of damping material during the die-cutting and during the transportation step which is due to the weight of the various overlapping materials.

It is therefore necessary to use an additional layer of material such as a liner or similar removable protective films which extend well beyond the shape of the damping material to avoid this problem.

Furthermore, when the butyl is coupled with a metal layer to form a double-layer, the obtained damping materials must be packed in small sized containers, for the same reason in that the butyl would leak from the materials once subjected to pressure. Said containers, however, require handling and disposal.

Furthermore, the double-layer damping material covered with the covering liner is not as easy to handle.

A further problem of all known damping materials is the fact that they are very heavy, while car manufacturers continually require lighter products so as to also achieve savings in fuel.

Furthermore, new damping materials having high damping properties are under constant research.

### SUMMARY OF THE INVENTION

The object of the present invention is to provide an acoustic damper which solves all the above mentioned problems and which, particularly, has improved damping properties and is lighter.

According to the present invention the above object is achieved by a multilayer material according to claims 1 to 11.

US2004211934 pertains to water-based compositions useful for forming acoustic- and vibration-damping coatings on substrates, particularly relatively thin, rigid materials such as sheet metal. In particular, the invention relates to compositions containing water, dispersed particles of one or more polymers, one or more particulate inorganic fillers, and expandable microspheres.

US2009017216 discloses compositions for damping the vibration of mechanical components, such as those used in vehicles, are disclosed and described. The compositions comprise resin blends that are semi-compatible and which are blended to form a micro-phase separation.

US2003144409 discloses an improved magnetic composition, which may be employed for sealing, baffling, vibrational and acoustical dampening, structural reinforcing, combinations thereof or the like.

US2009188746 provides a vibration damping material excellent in vibration damping property and lightness, and in particular, a vibration damping material which can be preferably used for cars required to be light. In the vibration damping material of the invention, a foamed adhesive layer is integrally laminated onto one of the surfaces of a foamed thermoplastic resin sheet. Thus, vibration energy transmitted to the vibration damping material is smoothly absorbed by a synergetic effect of rigidity of the foamed thermoplastic resin sheet and viscoelasticity of the foamed adhesive layer, so that excellent vibration damping property is exhibited.

JP2004018670 discloses a vibration-damping coating material capable of exhibiting vibration-damping ability in a wide range of frequencies and minimizing the temperature dependency, and having an excellent moldability. The vibration-damping coating material is produced by filling 50-55 wt% of an inorganic filler, the whole particle size distribution of which is adjusted to 1-100 [mu]m by controlling the average particle size and the void ratio of which is minimized, into a mixture comprising acrylic emulsions having glass transition temperature of -25 to 25[deg.]C in single or mixed with each other, a resin, a silane coupling agent, and a polymer additive such as polyvinyl alcohol. The vibration-damping coating material thus produced is a one-pack type aqueous coating material comprised of acrylic emulsions and a plate-shaped filler which satisfies both of a vibration-damping property and a sound-proofing property at the same time.

GB840663 discloses lightweight materials in which individual particles of porous thermoplastic resin are surrounded by or enclosed in a solid binding agent and made by mixing particles of a thermoplastic synthetic resin with a blowing agent and with a binding agent which is solid at room temperature, softens at a temperature below the softening range of the thermoplastic resin and which does not dissolve the thermoplastic resin when heated, and thereafter expanding the mixture by heating it to a temperature above the softening range of the thermoplastic resin.

### DESCRIPTION OF THE INVENTION

In the context of the present invention, the term layer means a mass of homogeneous material lying more or less evenly over a surface.

In the context of the present invention, the term "coupled" refers to the fact that a layer is "in direct contact" with the nearest layer and is inseparable therefrom. To couple two layers various methods are possible such as coating, and spraying.

In the context of the present invention, the term "density" of the multilayer material means the measured total density of the finished product.

According to the present invention, a multi-layer material comprising a first layer having a modulus of elasticity between 70 and 150 N/mm² is provided, coupled to a second layer comprising a reticulated viscoelastic material comprising at least one acrylic resin.

The first layer preferably consists of a metal layer being, even more preferably, aluminum.

The thickness of the first layer is preferably between 20 and 500 *µ*m, more preferably between 50 and 300 *µ*m, and most preferably between 75 and 200 *µ*m.

The second layer comprises a reticulated viscoelastic material preferably comprising an acrylic resin. Preferably the thickness of the second layer is between 1 and 3 mm.

Preferably, the multilayer material has a composite loss factor greater than 0.44 at 20°C for a weight of 2 kg per square meter.

Preferably the viscoelastic material has a modulus of elasticity between 1*10⁷ and 1.80*10⁹ N/m².

Preferably the acrylic resin is present in the viscoelastic material in % by weight between 25 and 50% of the weight of the reticulated material.

Preferably acrylic resins used are, with a vitreous transition temperature (Tg) in the temperature range from +10°C to -35°C.

Preferably the double-layer material obtained by the coupling between the first and the second layer has a total density of less than 1200 kg/m³.

More preferably, the multilayer material has a density between 900 and 1100 kg/m³.

Preferably the viscoelastic material in addition to the acrylic resin further comprises a resin chosen from the group consisting of colophony, coumarone-indene or mixtures thereof.

Preferably the reticulated viscoelastic material is in the form of solid resin in the finished product, and comprises fillers within percentages between 50 and 75% by weight with respect to the weight of the solid resin.

Preferably, the multilayer material comprises a filler chosen from the group constituted by talcum, calcium carbonate, mica, graphite or mixtures thereof.

Preferably, the multilayer material comprises a filler magnetizable or permanently magnetically orientable.

Preferably, in this case the multilayer material comprises a filler chosen from the group consisting of barium hexaferrite, strontium hexaferrite or mixtures thereof.

Preferably the viscoelastic material further comprises an expander. More preferably the expander comprises microspheres with mean granulometry between 10 and 80 *µ*m, even more preferably between 10 and 30 *µ*m and an expansion temperature between 80°C and 120°C, more preferably between 80°C and 95°C.

Preferably the viscoelastic material further comprises a thixotropic thickener.

Preferably, the thixotropic thickener is an emulsion of a copolymer containing an acrylic resin.

For example, the thixotropic thickener can be ACRYSOL ASF 60 - Dow Chemicals or UNICRYL TH6 - Sarco Chemicals.

Preferably, the multilayer material further comprises a third layer in contact with the second layer. The third layer is preferably constituted by a transferable self-adhesive. Preferably the third layer has a weight ranging between 40 to 120 g/m².

Preferably, the multilayer material further comprises a fourth layer in contact with the third layer and the fourth layer is preferably a removable silicone film.

The multilayer material of the present invention is manufactured by first preparing the viscoelastic material in a mixer and then adding the acrylic resin in aqueous dispersion.

Preferably, the acrylic resins in aqueous dispersion are introduced in a turbo mixer. Subsequently and while being stirred, additives are added such as, purely by way of example, antifoams, dispersants, coalescing agents, etc. Then, while being stirred continually, all the powdered materials are added, comprising the expander. Mixing continues under a vacuum for about 10-15 minutes until the mixture is homogeneous and free from air bubbles.

Subsequently, while still under the vacuum, preferably a thixotropic thickener is added, then left to be mixed under vacuum and the viscoelastic compound is emptied into suitable containers.

In a subsequent step, the compound is preferably spread on the aluminum layer and subjected to heat for the complete reticulation of the acrylic resin.

The first layer is preferably coupled to the second layer by coating or spraying.

Finally, the damping material is preferably associated with a third and fourth layer formed by a coupled element made of a self-adhesive transfer film, protected by removable silicone film.

The resulting product can then be cut into sheets for subsequent template die-cutting with specific equipment.

For under-head applications a magnetization step is added, preferably on the material already reticulated.

The multilayer material is preferably used as acoustic damper.

As for traditional products, the damping materials, to which the present invention relates, can be supplied already sheared and cut according to the predefined dimensions required by specific applications for the car, such as leathers on the doors, on the under-seat metal sheet, on the wheel-well, on the spark arrester, under the roof panel, etc.

From an examination of the characteristics of the multilayer material, according to the present invention, the advantages that it obtains are apparent.

In particular, it is characteristic of the multilayer material according to the present invention, to have non-sticky edges, which do not require special protection and the use of the protective film is only limited to the component surface, allowing a reduction of the disposal volume of the protective liner. It is also possible, in this way, to save on the additional containers required by the double-layers utilizing butyl rubber.

Furthermore, with respect to traditional products formed by a bituminous coating, the product of the present invention is characterized by an extreme malleability and formability and is easily applicable also on metal sheets with ribs and bosses, without the need to be preheated, as is the case today, to make the bituminous substrate softer.

The product relating to the present invention, furthermore, overcomes all the negative limitations of the double-layers made from butyl rubber.

Some examples of damping material according to the present invention are shown in the following thereby the invention is not limited thereto.

### EXAMPLES 1-3

In Table 1 three examples of viscoelastic material are shown, usable as a second layer to form a multilayer material according to the present invention.

**Table 1**

| Components (% by weight) | 1 | 2 | 3 |
|---|---|---|---|
| Acrylic resin - ACRONAL 3612 - Tg -12 °C - BASF | 30.0% | 30.0% | 20.0% |
| Acrylic resin - PRIMAL C.A 187 - Tg -27 °C - R.HAAS | 20.0% | 20.0% | |
| Acrylic resin - ACRONAL DS 3502 - Tg + 4 °C - BASF | | | 30.0% |
| Antifoams TEGP ANT. D2315 - Evonik | 0.2% | 0.2% | 0.2% |
| Dispersant OROTAN 4045 - Dow Chemicals | 0.5% | 0.5% | 0.5% |
| Coalescent DOWANOL DPNB - Dow Chemicals | 1.0% | 1. 0% | 1. 0% |
| Colophony Resin - COLOPHONY W - Costa Irados | 2.0% | 2.0% | 2.0% |
| Mica 60 (40-60 micron) - Minerals | 10.0% | | 10.0% |
| Black Pigment - Iron Oxide 81C - Rock Wood | 0.3% | | 0.3% |
| Calcium carbonate - Omycarb 2 av - Omya | 10.0% | | 20.0% |
| Calcium carbonate - Omycarb 40 av - Omya | 25.0% | | 15.0% |
| Ferrite - Strontium Ferrite type 16 - Tridelta | | 45.3% | |
| Expanders: Expancel 031 DU 40 - AKZO NOBEL | 0.3% | 0.3% | 0.3% |
| Thickener and thixotropic - ACRYSOL ASE 60 - Dow Chemicals | 0.7% | 0.7% | 0.7% |
| | 100% | 100% | 100% |

The formulation 1 allows to obtain excellent results when coupled to an aluminum sheet of a thickness preferably of 100 *µ*m, more preferably of 150 *µ*m.

In the formulation 2 a magnetization step is added after reticulation to orient the hexaferrite crystals contained in the viscoelastic material.

This formulation is particularly suitable for under-head applications.

Said formulation 3 allows to obtain excellent results when coupled to an aluminum sheet of a thickness preferably of 100 *µ*m, more preferably 150 *µ*m, and particularly for working temperatures with maximum loss factor at 40°C.

### Examples 4-6

In Table 2 two multilayer materials made according to the prior art are compared with a double-layer multilayer material according to the present invention.

For convenience in comparison a first soft_aluminum layer of 150 *µ*m in thickness was used in all three examples.

| Characteristic | Aluminum + bitumen | Aluminum + butyl | Aluminum 150 microns + Acrylic according to the formulation 1 |
|---|---|---|---|
| Density kg/dm³ | 1.8 | 1.7 | 1 |
| Minimum Thickness [mm] | 1.7 | 1.3 | 1.5 |
| Minimum Weight Kg/m² | 3 | 2.2 | 1.5 |
| Composite loss factor (on sheet 0.8 mm) according to ASTM E 756 | 3 kg/m² | 2.2 kg/m² | 2 kg/m² |
| 10°C | 0.25 | 0.26 | 0.30 |
| 20°C | 0.28 | 0.30 | 0.44 |
| 30°C | 0.24 | 0.26 | 0.30 |

As is evident from the results shown in Table 2, the composite loss factor obtained by using a multilayer material according to the present invention is better than that obtained from the multilayer materials according to the prior art. Simultaneously, the multilayer material according to the present invention, however, is also much lighter thus meeting the needs of the producers, particularly of the automotive industries.

## Claims

1. A multilayer material comprising a first metal layer having a modulus of elasticity between 70 and 150 N/mm² coupled to a second layer comprising a reticulated viscoelastic material comprising at least one acrylic resin, **characterised in that** the modulus of elasticity of said viscoelastic material is between 1*10⁷ N/m² and 1.80*10⁹ N/m², **in that** said at least one acrylic resin is present in said viscoelastic material in percentage by weight between 25 and 50%, **in that** the vitreous transition temperature (Tg) of said at least one acrylic resin is in the temperature range from +10°C to -35°C, **in that** the density measured as total density between the first and second layer is lower than 1200 kg/m³, **in that** the second layer comprises a resin chosen from the group constituted by colophony, coumarone-indene or mixtures thereof and **in that** said reticulated viscoelastic material comprises fillers in percentage between 50 and 75% by weight with respect to the weight of the solid resin.

2. The multilayer material according to any one of the preceding claims, **characterized in that** the total density is between 900 and 1100 kg/m³.

3. The multilayer material according to any one of the preceding claims, **characterized in that** the second layer comprises a filler chosen from the group constituted by talcum, calcium carbonate, mica, graphite or mixtures thereof.

4. The multilayer material according to any one of the preceding claims, **characterized in that** the second layer comprises a magnetizable filler.

5. A multilayer material according to any one of the preceding claims, **characterized in that** the second layer comprises a filler chosen from the group constituted by barium hexaferrite, strontium hexaferrite or mixtures thereof.

6. The multilayer material according to any one of the preceding claims, **characterized in that** the second layer comprises an expander.

7. The multilayer material according to any one of the preceding claims, **characterized in that** the second layer comprises a thixotropic thickener.

8. The multilayer material according to any one of the preceding claims, **characterized in that** said first layer is aluminum.

9. The multilayer material according to any one of the preceding claims, **characterized in that** the thickness of said first layer is between 50 to 300 µm.

10. The multilayer material according to any one of the preceding claims, characterized it comprises a third layer in contact with said second layer and in that said third layer is constituted by a transferable self-adhesive.

11. The multilayer material according to claim 10, **characterized in that** it comprises a fourth layer and **in that** said fourth layer is a removable silicone film.

## Patentansprüche

1. Mehrschichtiges Material, umfassend eine erste Metallschicht mit einem Elastizitätsmodul zwischen 70 und 150 N/mm², die mit einer zweiten Schicht verbunden ist, die ein vernetztes bzw. retikuläres viskoelastisches Material umfasst, das mindestens ein Acrylharz umfasst, **dadurch gekennzeichnet, dass** der Elastizitätsmodul des viskoelastischen Materials zwischen 1*10⁷ N/m² und 1,80*10⁹ N/m² liegt, dass das mindestens eine Acrylharz in dem viskoelastischen Material in Gewichtsprozent zwischen 25 und 50 % vorhanden ist, dass die Glasübergangstemperatur (Tg) des mindestens einen Acrylharzes im Temperaturbereich von +10°C bis -35°C liegt, dass die Dichte, gemessen als Gesamtdichte zwischen der ersten und zweiten Schicht, geringer als 1200 kg/m³ ist, dass die zweite Schicht ein Harz umfasst, das aus der Gruppe ausgewählt ist, die aus Kolophonium, Cumaron-Inden oder deren Gemischen besteht, und dass das vernetzte bzw. retikuläre viskoelastische Material Füllstoffe in Prozent zwischen 50 und 75 Gew.-%, bezogen auf das Gewicht des festen Harzes, umfasst.

2. Mehrschichtiges Material nach einem der vorangehenden Ansprüche, **dadurch gekennzeichnet, dass** die Gesamtdichte zwischen 900 und 1100 kg/m³ liegt.

3. Mehrschichtiges Material nach einem der vorangehenden Ansprüche, **dadurch gekennzeichnet, dass** die zweite Schicht einen Füllstoff umfasst, der aus der Gruppe ausgewählt ist, die aus Talkum, Calciumcarbonat, Glimmer, Graphit oder deren Gemischen besteht.

4. Mehrschichtiges Material nach einem der vorangehenden Ansprüche, **dadurch gekennzeichnet, dass** die zweite Schicht einen magnetisierbaren Füllstoff enthält.

5. Mehrschichtiges Material nach einem der vorangehenden Ansprüche, **dadurch gekennzeichnet, dass** die zweite Schicht einen Füllstoff umfasst, der aus der Gruppe ausgewählt ist, die aus Bariumhexaferrit, Strontiumhexaferrit oder deren Gemischen besteht.

6. Mehrschichtiges Material nach einem der vorangehenden Ansprüche, **dadurch gekennzeichnet, dass** die zweite Schicht einen Expander umfasst.

7. Mehrschichtiges Material nach einem der vorangehenden Ansprüche, **dadurch gekennzeichnet, dass** die zweite Schicht ein thixotropes Verdickungsmittel umfasst.

8. Mehrschichtiges Material nach einem der vorangehenden Ansprüche, **dadurch gekennzeichnet, dass** die erste Schicht Aluminium ist.

9. Mehrschichtiges Material nach einem der vorangehenden Ansprüche, **dadurch gekennzeichnet, dass** die Dicke der ersten Schicht zwischen 50 und 300 *µ*m liegt.

10. Mehrschichtiges Material nach einem der vorangehenden Ansprüche, **dadurch gekennzeichnet, dass** es eine dritte Schicht in Kontakt mit der zweiten Schicht umfasst und dass die dritte Schicht aus einem übertragbaren Selbstkleber besteht.

11. Mehrschichtiges Material nach Anspruch 10, **dadurch gekennzeichnet, dass** es eine vierte Schicht umfasst und dass die vierte Schicht ein entfernbarer Silikonfilm ist.

## Revendications

1. Matériau multicouche comprenant une première couche métallique ayant un module d'élasticité entre 70 et 150 N/mm² couplée à une deuxième couche comprenant un matériau viscoélastique réticulé comprenant au moins une résine acrylique, **caractérisé en ce que** le module d'élasticité dudit matériau viscoélastique est entre 1*10⁷ N/m² et 1,80*10⁹ N/m², **en ce que** ladite au moins une résine acrylique est présente dans ledit matériau viscoélastique en un pourcentage en poids entre 25 et 50%, **en ce que** la température de transition vitreuse (Tg) de ladite au moins une résine acrylique est dans la plage de température de +10 °C à -35 °C, **en ce que** la masse volumique mesurée en tant que masse volumique totale entre la première et la deuxième couche est inférieure à 1200 kg/m³, **en ce que** la deuxième couche comprend une résine choisie dans le groupe constitué par le colophane, le coumarone-indène ou les mélanges de ceux-ci et **en ce que** le matériau viscoélastique réticulé comprend des charges en un pourcentage entre 50 et 75 % en poids par rapport au poids de la résine solide.

2. Matériau multicouche selon la revendication précédente, **caractérisé en ce que** la masse volumique totale est entre 900 et 1100 kg/m³.

3. Matériau multicouche selon l'une quelconque des revendications précédentes, **caractérisé en ce que** la deuxième couche comprend une charge choisie dans le groupe constitué par le talc, le carbonate de calcium, le mica, le graphite ou les mélanges de ceux-ci.

4. Matériau multicouche selon l'une quelconque des revendications précédentes, **caractérisé en ce que** la deuxième couche comprend une charge magnétisable.

5. Matériau multicouche selon l'une quelconque des revendications précédentes, **caractérisé en ce que** la deuxième couche comprend une charge choisie dans le groupe constitué par l'hexaferrite de baryum, l'hexaferrite de strontium ou les mélanges de ceux-ci.

6. Matériau multicouche selon l'une quelconque des revendications précédentes, **caractérisé en ce que** la deuxième couche comprend un expanseur.

7. Matériau multicouche selon l'une quelconque des revendications précédentes, **caractérisé en ce que** la deuxième couche comprend un épaississant thixotropique.

8. Matériau multicouche selon l'une quelconque des revendications précédentes, **caractérisé en ce que** ladite première couche est en aluminium.

9. Matériau multicouche selon l'une quelconque des revendications précédentes, **caractérisé en ce que** l'épaisseur de ladite première couche est entre 50 et 300 µm.

10. Matériau multicouche selon l'une quelconque des revendications précédentes, **caractérisé en ce qu'**il comprend une troisième couche en contact avec ladite deuxième couche et **en ce que** ladite troisième couche est constituée par un auto-adhésif transférable.

11. Matériau multicouche selon la revendication 10, **caractérisé en ce qu'**il comprend une quatrième couche et **en ce que** ladite quatrième couche est un film en silicone amovible.
